# EUROPEAN PATENT SPECIFICATION

(11) **EP 2 547 054 B1**
(45) Date of publication and mention of the grant of the patent: **29.10.2014**
(21) Application number: 12174751.3
(22) Date of filing: 03.07.2012
(51) Int. Cl.: H04L 12/713

(54) **Virtual router redundancy protocol based message sending and receiving method, apparatus and system**
Virtuelles router-redundanzprotokollbasiertes Nachrichtensende- und Empfangsverfahren, -vorrichtung und -system
Procédé d'envoi et de réception de message à base de protocole de redondance de routeur virtuel, appareil et système

(30) Priority: 04.07.2011 CN 201110185004
(43) Date of publication of application: 16.01.2013
(73) Proprietor: Huawei Technologies Co., Ltd., Longgang District, Shenzhen Guangdong 518129 (CN)
(72) Inventor: Chen, Wei, 518129 Shenzhen Guangdong (CN); Zhang, Qiang, 518129 Shenzhen Guangdong (CN); Gao, Caiqin, 518129 Shenzhen Guangdong (CN); Zhang, Chengsong, 518129 Shenzhen Guangdong (CN)
(74) Representative: Isarpatent

(56) References cited:
- CN-A- 102 035 744
- NADAS S ET AL: "Virtual Router Redundancy Protocol (VRRP) Version 3 for IPv4 and IPv6; rfc5798.txt", VIRTUAL ROUTER REDUNDANCY PROTOCOL (VRRP) VERSION 3 FOR IPV4 AND IPV6; RFC5798.TXT, INTERNET ENGINEERING TASK FORCE, IETF; STANDARD, INTERNET SOCIETY (ISOC) 4, RUE DES FALAISES CH- 1205 GENEVA, SWITZERLAND, 10 March 2010 (2010-03-10), pages 1-40, XP015068221, [retrieved on 2010-03-10]

## Description

### Technical Field

The present invention relates to the field of communication, and more particularly, to a virtual router redundancy protocol (VRRP) based message sending and receiving method, apparatus and system.

### Background Art

Currently, with the fast change, quick popularization and further application of networks, various value-added services have been widely deployed in the networks, and bandwidths of the networks have increased rapidly. Short-time interruption of the network may have adverse effect on a large quantity of services, seriously affecting the reliability of the networks and causing significant loss. Virtual router redundancy protocol is a reliable technology, which may realize a redundancy backup for gateway device, and thereby improving the reliability of the networks.

The VRRP organizes a plurality of router interfaces within a broadcast domain into one group to form a VRRP group, and allocates an IP address to the VRRP group as an interface address thereof. The interface address may either be an address of a router's interface in the VRRP group, or an address of a third party. If an interface address of a router is used, the router owning this IP address becomes the Master router, and the remaining routers become the Backup routers. If an address of a third party is used, the router with the highest priority in the group becomes the Master router. When routers in a VRRP group all have the same priorities, the router sending a VRRP message first becomes the Master router.

There are two existing VRRP versions, VRRP V2 and VRRP V3, where the VRRP V2 is prescribed in RFC3768, and the VRRP V3 is prescribed in RFC5798; and hybrid networks in which VRRP V2 device(s) and VRRP V3 device(s) are applied will exist for a long time. In order to have compatibility between the two versions, a VRRP-based data transmitting method is provided in prior art. The method may comprise the steps of: a Master device (a VRRP V3 device) of the VRRP group sends announcement messages in both VRRP V2 and V3 simultaneously to a Backup device, and if the Backup device is a VRRP V3 device, processing will be performed on the VRRP V3 announcement message and the VRRP V2 one will be discarded.

In implementing the present invention, it was found that the following problem exists in the prior art solution:
in the prior art, a Master device sends messages in both VRRP V2 and V3 to one or multiple Backup device(s), no matter whether the Backup device is a V2 device or a V3 device. This results in that a large quantity of redundancy messages are generated between the Master device and the Backup device, increasing the amount of data transmitted between the Master device and the Backup device, and consequently occupying the bandwidth between the Master device and the Backup device.

CN 102035744 is directed to a method for performing communication among virtual router redundancy protocol, VRRP, routers and the routers. The method comprises the following steps of: judging whether a VRRPv2 router and a VRRPv3 router exist in the same VRRP group or not according to the acquired VRRP information, wherein the VRRP information comprises identifiers of the VRRP routers, an identifier of the VRRP group and a VRRP version; and if so, inhibiting the transmission of a VRRPv3 message in the preset time and otherwise, inhibiting the transmission of a VRRPv2 message in the preset time, wherein each router comprises a judgment module and an inhibition module.

### Summary of the Invention

An object of the embodiments of the present invention is to provide a virtual router redundancy protocol (VRRP) based message sending and receiving method, apparatus and system, so as to solve the problem of generating a large quantity of redundancy messages in the technical solution of the prior art.

A first aspect of the embodiments of the present invention provides a VRRP based message sending method, comprising the steps of:
sending a version inquiring message to a backup device in a VRRP group;
receiving a version responding message sent by the backup device, and acquiring the version information of the backup device according to the version responding message; and
selecting one of a VRRP V2 message and a VRRP V3 message according to the version information of the backup device and sending the selected message to the backup device in the VRRP group.

According to a possible implementation of the first aspect of the embodiments of the present invention, the step of selecting one of a VRRP V2 message and a VRRP V3 message according to the version information of the backup device and sending the selected message to the backup device in the VRRP group comprises:
if the VRRP group comprises one backup device, selecting a message having a version which is the same as that of the backup device, and sending the selected message to the backup device in the VRRP group;
if the VRRP group comprises multiple backup devices, sending a VRRP V3 message to each one of the backup devices in the VRRP group when the versions of the multiple backup devices are all VRRP V3, and sending a VRRP V2 message to each one of the backup devices in the VRRP group when the versions of the multiple backup devices are not all VRRP V3.

According to the first aspect of the embodiments of the present invention, the step of sending a version inquiring message to a backup device in a VRRP group comprises:
encapsulating the version inquiring message by using the physical MAC of an interface, and sending the encapsulated version inquiring message to the backup device in the VRRP group.

A second aspect of the embodiments of the present invention provides a VRRP based message receiving method, comprising the steps of:
receiving a version inquiring message sent by a master device in a VRRP group; and
carrying local VRRP version information in a version responding message, and sending the version responding message to the master device.

According to a possible implementation of the second aspect of the embodiments of the present invention, the step of sending the version responding message to the master device comprises:
encapsulating the version responding message by using a physical MAC of an interface, and sending the encapsulated version responding message to the master device.

A third aspect of the embodiments of the present invention provides a VRRP based message sending apparatus, comprising: an inquiring unit configured to a version inquiring message to a backup device in a VRRP group; an acquiring unit configured to receive a version responding message sent by the backup device, and acquiring version information of the backup device in the VRRP group according to the version responding message; and a selecting unit configured to select one of a VRRP V2 message and a VRRP V3 message according to the version information of the backup device and sending the selected message to the backup device in the VRRP group.

According to a possible implementation of the third aspect of the embodiments of the present invention, the selecting unit is specifically configured to:
if the backup device in the VRRP group comprises one backup device, select a message having a version which is the same as that of the backup device, and send the selected message to the backup device in the VRRP group; or
if the backup device in the VRRP group comprises multiple backup devices, send a VRRP V3 message to each one of the backup devices in the VRRP group when the versions of the multiple backup devices are all VRRP V3, otherwise send a VRRP V2 message to each one of the backup devices in the VRRP group.

According to another possible implementation of the third aspect of the embodiments of the present invention, the inquiring unit comprises:
an encapsulating module configured to encapsulate the version inquiring message by using a physical MAC of an interface; and
a sending module configured to send the encapsulated version inquiring message to the backup device in the VRRP group.

A fourth aspect of the embodiments of the present invention provides a VRRP based message receiving apparatus, comprising: a receiver configured to receive a version inquiring message sent by a master device; a version inquiring unit configured to carry the inquired local VRRP version information in a version responding message; and a transmitter configured to send the version responding message to the master device.

According to a possible implementation of the fourth aspect of the embodiments of the present invention, the transmitter is specifically configured to encapsulate the version responding message by using a physical MAC of an interface, and send the encapsulated version responding message to the master device.

A fifth aspect of the embodiments of the present invention provides a VRRP based message transmitting system comprising a VRRP group consisting of a Master device and at least one of Backup device, wherein the Master device is configured to send a version inquiring message to the Backup device, and the Backup device is configured to receive the version inquiring message sent by the Master device, carry the inquired VRRP version information of the Backup device in a version responding message, and send the version responding message to the Master device; and wherein the Master device is further configured to receive the version responding message, acquire the version information of the Backup device according to the version responding message, and select one of a VRRP V2 message and a VRRP V3 message according to the version information of the Backup device and send the selected message to the Backup device.

According to the technical solution provided by the embodiments of the present invention, after a version inquiring message is sent, a version responding message is received, and version information of backup device in the VRRP group is acquired according to the version responding message; and one of a VRRP V2 message and a VRRP V3 message is selected according to the version information of the backup device and is sent to the backup device in the VRRP group. According to the technical solution provided by the embodiments of the present invention, in view of the fact that the message sent to the backup device in the VRRP group is an one-version message, such method will not generate a large quantity of redundancy messages, thereby decreasing the amount of data transmitted between the master device and the backup device, and saving the bandwidth between the master device and the backup device.

### Brief Description of the Drawings

Figure 1 is a flowchart of a VRRP based message sending method according to an embodiment of the present invention;
Figure 2 is a flowchart of a VRRP based message receiving method according to an embodiment of the present invention;
Figure 3 is a diagram showing the network topological structure provided by an embodiment of the present invention;
Figure 4 is a flowchart of a VRRP based message transmitting method according to an embodiment of the present invention;
Figure 5 is a schematic diagram of a VRRP based message sending apparatus according to an embodiment of the present invention; and
Figure 6 is a schematic diagram of a VRRP based message receiving apparatus according to an embodiment of the present invention.

### Detailed Description of the Invention

For further understanding of the objects, technical solution and advantages of the present invention, the present invention shall be described below in detail with reference to drawings and embodiments thereof. It should be understood that the particular embodiments are described here for the purpose of explaining the present invention only, and are not intended for limiting the present invention.

For the convenience of the explanation, in the particular embodiments of the present invention, V2 denotes VRRP V2, and V3 denotes VRRP V3, unless it is defined otherwise.

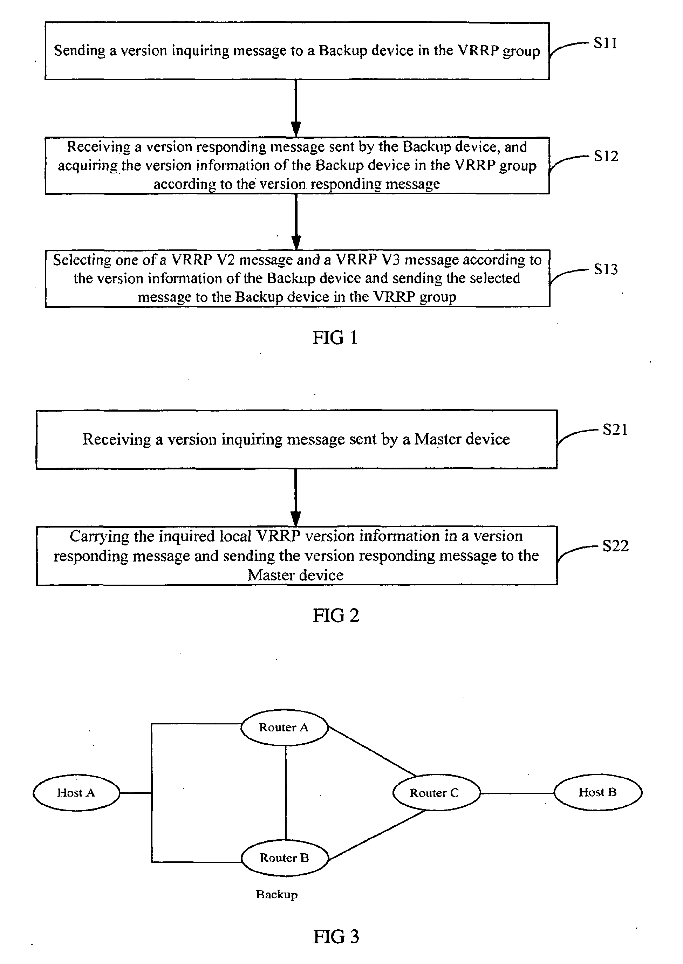

The present invention provides a virtual router redundancy protocol (VRRP) based message sending method, which is carried out by a Master device of a virtual router. As shown in Fig. 1, the method comprises the steps of:
S11: sending a version inquiring message to a Backup device in a VRRP group to which the Master device belongs;
S12: receiving a version responding message sent by the Backup device, and acquiring version information of the Backup device in the VRRP group according to the version responding message; and
S13: selecting one of a V2 message and a V3 message according to the version information of the Backup device and sending the selected message to the Backup device in the VRRP group.

According to the method provided in the embodiment of the present invention, after a version inquiring message is sent, a version responding message is received, the version information of the Backup device in the VRRP group is acquired according to the version responding message, and then one of a V2 message and a V3 message is selected according to the version information and sent to the Backup device in the VRRP group. According to the method provided in the present invention, the message finally sent to the Backup device in the VRRP group is an one-version message, such method will not generate a large quantity of redundancy messages, having advantages of decreasing the amount of data transmitted between the Master device and the Backup device, and saving the bandwidth between the Master device and the Backup device.

Alternatively, the implementation of step S13 may be done as follows: when the Backup device in the VRRP group comprises one Backup device, selecting a message of a version which is the same as that of the Backup device and sending the selected message to the Backup device in the VRRP group. Of course, the implementation of step S13 may also be done as follows: when the Backup device in the VRRP group comprises multiple Backup devices, if each one of the Backup devices has V3 as its version, then a V3 message is sent to each one of the Backup devices in the VRRP group; otherwise, a V2 message is sent to each one of the Backup devices in the VRRP group.

The implementation of step S13 provided by the present invention is conducted such that the version of the outgoing messages will be automatically adjusted by the Master device when a V2 device is upgraded to V3, without performing any manual adjustment by a user, and thereby improving the efficiency of upgrading device's version.

Alternatively, the implementation of step S11 may comprise:
after encapsulating a version inquiring message by using the physical media access control (MAC) of an interface, sending the encapsulated version inquiring message to the Backup device in the VRRP group.

In this way, it is possible to prevent the traffic from being affected during interaction by sending a version inquiring message after having encapsulated the version inquiring message using a physical MAC of an interface, and thereby improving the stability of the network.

Alternatively, the implementation of step S11 may further comprise: sending a version inquiring message to the Backup device in the VRRP group at a predetermined time interval; wherein the time interval may be defined by a user, such as 30 seconds or 1 minute, etc.

Alternatively, the step of sending a version inquiring message may further comprise: sending the version inquiring message in an encryption manner. Here, as the encryption scheme, various encryption schemes could be employed. For example, the message could be encrypted with a key. Of course, other schemes may also be used in practice, and the present invention is not limited thereto.

The embodiments of the present invention further provide a VRRP based message receiving method, which is carried out by Backup device in a VRRP group. As shown in Fig. 2, the method comprises the steps of:
S21: receiving a version inquiring message sent by a Master device; and
S22: carrying inquired local VRRP version information in a version responding message, and sending the version responding message to the Master device.

The VRRP based message receiving method provided by the present invention cooperates with the implementation of the above VRRP based message sending method.

Alternatively, the implementation of step S22 may comprise:
sending the above version responding message to the Master device after having encapsulated the message using a physical MAC of an interface. By doing so, it is possible to prevent the traffic from being affected during interaction by sending a version inquiring message after having encapsulated the version inquiring message using the physical MAC of an interface, and thereby improving the stability of the network.

Furthermore, it should be noted that if the version inquiring message is an encrypted message, S21-S22 are performed after the decryption of the message. And if the decryption fails, the operation is terminated.

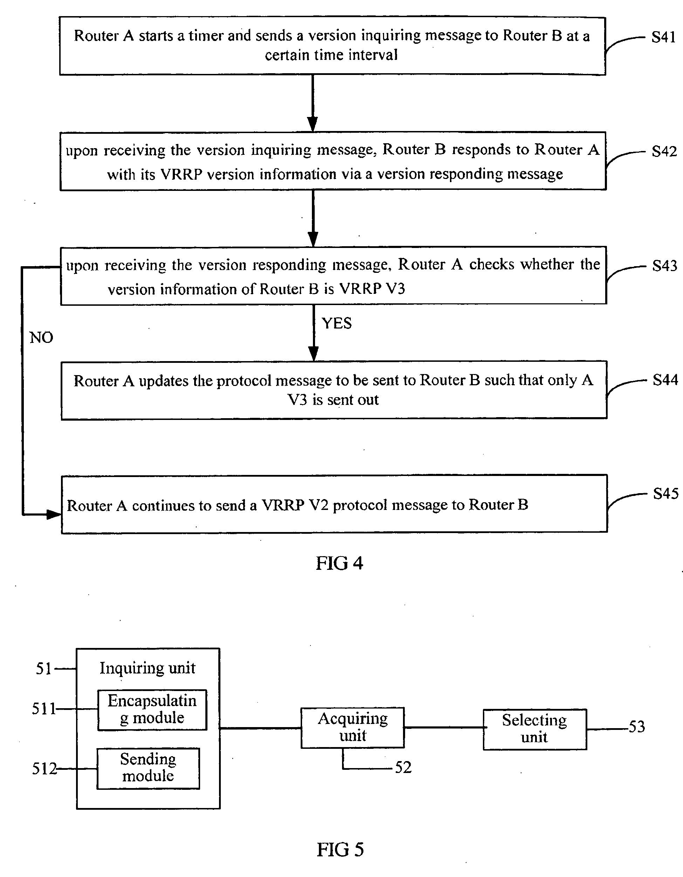

An example is provided by the embodiments of the present invention, which is carried out in the network shown in Fig. 3, for example. As shown in Fig. 3, a VRRP group consists of a Router A and a Router B; where Router A has been upgraded to a V3 device, and Router B remains as a V2 device; and Router A may be the Master device in the VRRP group, and Router B may be the Backup device in the VRRP group. The VRRP based message communicating method provided by this example is as shown in Fig. 4, which comprises:
S41: Router A starts a timer and sends a version inquiring message to Router B at a certain time interval (e.g. 30 seconds);
S42: upon receiving the version inquiring message, Router B responds to Router A with its VRRP version information via a version responding message;
S43: upon receiving the version responding message, Router A checks whether the version information of Router B is V3, and if yes, executes S44, otherwise, executes S45;
S44: Router A updates the protocol message to be sent to Router B, such that only a V3 message is sent out; and
S45: Router A continues to send a V2 protocol message to Router B.

Router A may send the version inquiring message in an encryption manner in order to avoid being attacked in consideration of security.

In addition, in order to prevent the guidance of user traffic from being affected due to the communication of the version inquiring message and the version responding message, the above two types of message could be encapsulated using a physical MAC of an interface.

According to the method provided by this example, after a version inquiring message is sent, a version responding message is received, and the version of Router B is acquired according to the version responding message; when Router B is a V3 device, only a V3 message is sent, and when Router B is a V2 device, a V2 message is sent correspondingly. According to the method provided by the present invention, the message finally sent to Router B is a one-version message, such method will not generate a large quantity of redundancy messages, and has an advantage of saving the bandwidth.

The embodiments of the present invention further provide a VRRP based message sending apparatus. As shown in Fig. 5, the apparatus comprises:
an inquiring unit 51, configured to send a version inquiring message to a Backup device in a VRRP group;
an acquiring unit 52, configured to receive a version responding message sent by the Backup device, and acquiring the version information of the Backup device in this VRRP group according to the version responding message; and
a selecting unit 53, configured to select one of a V2 message and a V3 message according to the version information of the Backup device and sending the selected message to the Backup device in the VRRP group.

Alternatively, the selecting unit 53 may be particularly used for:
when the Backup device in the VRRP group comprises one Backup device, selecting a message having a version as same as that of the Backup device in the VRRP group and sending the selected message to the Backup device in the VRRP group; or
when there exist multiple Backup devices in the VRRP group, sending a V3 message to each one of the Backup devices in the VRRP group if the multiple Backup devices are all V3 devices, and sending a V2 message to each one of the Backup devices in the VRRP group when not all the multiple Backup devices in the VRRP group are V3 devices.

Alternatively, the inquiring unit 51 may particularly comprise:
an encapsulating module 511, configured to encapsulate the version inquiring message by using a physical MAC of an interface; and
a sending module 512 for sending the encapsulated version inquiring message to the Backup device in the VRRP group.

According to the apparatus provided by the present invention, after a version inquiring message is sent, a version responding message is received, the version information of the Backup device in the VRRP group is acquired according to the version responding message, and then one of a V2 message and a V3 message is selected according to the version information and is sent to the Backup device in the VRRP group. According to the apparatus provided by the present invention, the message finally sent to the Backup device in the VRRP group is one-version message, such apparatus will not generate a large quantity of redundancy messages, and has advantages of decreasing the amount of data transmitted between the Master device and the Backup device, and saving the bandwidth between the Master device and the Backup device.

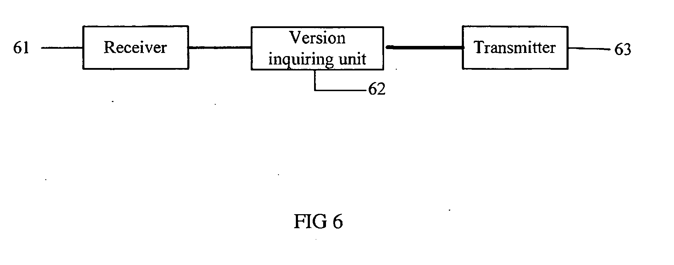

The embodiments of the present invention further provide a VRRP based message receiving apparatus. As shown in Fig. 6, the apparatus comprises:
a receiver 61, configured to receive a version inquiring message sent by a Master device;
a version inquiring unit 62, configured to carry inquired local VRRP version information in a version responding message; and
a transmitter 63, configured to send the version responding message to the Master device.

Alternatively, the transmitter 63 is particularly configured to send the version responding message to the Master device after having encapsulated the version responding message by using a physical MAC of an interface.

The VRRP based message receiving apparatus provided by the embodiment of the present invention cooperates with the implementation of the above VRRP based message sending method.

The present invention further provides a VRRP based message transmitting system, the system comprises: a VRRP group consisting of a Master device and at least one Backup device; wherein
the Master device is configured to send a version inquiring message to the Backup device;
the Backup device is configured to receive the version inquiring message sent by the Master device, carry the inquired VRRP version information of the Backup device in a version responding message, and send the version responding message to the Master device; and
the Master device is further configured to receive the version responding message, acquire the version information of the Backup device according to the version responding message, and select one of a V2 message and a V3 message according to the version information of the Backup device and send the selected message to the Backup device.

According to the system provided by the embodiment of the present invention, after a version inquiring message is sent, a version responding message is received, and version information of Backup device in the VRRP group is acquired according to the version responding message; and V2 or V3 is selected as the version of the outgoing protocol message according to the version information of the Backup device. According to the method provided by the present invention, because the message finally sent to the Backup device relates to one version only, such system will not generate a large quantity of redundancy messages, and has an advantage of saving the bandwidth.

The technical solution provided by the present invention has the advantages of avoiding generation of a large quantity of redundancy messages and saving the bandwidth.

It may be understood by those skilled in the art that all or part of the steps of the above embodiments may be implemented by hardware, or may be implemented by a program instructing the related hardware. The program may be stored in a computer-readable medium. The storage medium mention above may be a read-only memory (ROM), a magnetic disc, or an optic disc, etc.

The present invention has been described with reference to the above preferred embodiments, and is not intended to be limited thereto. Any modification, equivalent substitution and improvements made within the principle of the present invention shall be covered by the protection scope of the present invention.

## Claims

1. A virtual router redundancy protocol, VRRP, based message sending method, comprising the steps of:
sending (S11) a version inquiring message to a backup device in a VRRP group;
receiving (S12) a version responding message sent by the backup device, and acquiring the version information of the backup device according to the version responding message; and
selecting (S13) one of a VRRP V2 message and a VRRP V3 message according to the version information of the backup device and sending the selected message to the backup device in the VRRP group.

2. The method according to claim 1, wherein the step of selecting one of a VRRP V2 message and a VRRP V3 message according to the version information of the backup device and sending the selected message to the backup device in the VRRP group comprises:
if the VRRP group comprises one backup device, selecting a message having a version which is the same as that of the backup device, and sending the selected message to the backup device in the VRRP group;
if the VRRP group comprises multiple backup devices, sending a VRRP V3 message to each one of the backup devices in the VRRP group when the versions of the multiple backup devices are all VRRP V3, otherwise, sending a VRRP V2 message to each one of the backup devices in the VRRP group.

3. The method according to claim 1 or 2, wherein the step of sending a version inquiring message to a backup device in a VRRP group comprises:
encapsulating the version inquiring message by using a physical MAC of an interface, and sending the encapsulated version inquiring message to the backup device in the VRRP group.

4. A virtual router redundancy protocol, VRRP, based message sending apparatus, comprising:
an inquiring unit (51) configured to send a version inquiring message to a backup device in a an acquiring unit (52) configured to receive a version responding message sent by the backup device, and acquire the version information of the backup device in this VRRP group according to the version responding message; and
a selecting unit (53) configured to select one of a VRRP V2 message and a VRRP V3 message according to the version information of the backup device and send the selected message to the backup device in the VRRP group.

5. The apparatus according to claim 4, wherein the selecting unit (53) is specifically configured to:
if the backup device in the VRRP group comprises one backup device, select a message having a version which is the same as that of the backup device, and send the selected message to the backup device in the VRRP group; or
if the backup device in the VRRP group comprises multiple backup devices, send a VRRP V3 message to each one of the backup devices in the VRRP group when the versions of the multiple backup devices are all VRRP V3, otherwise send a VRRP V2 message to each one of the backup devices in the VRRP group.

6. The apparatus according to claim 4 or 5, wherein the inquiring unit (51) comprises:
an encapsulating module (511) configured to encapsulate the version inquiring message by using a physical MAC of an interface; and
a sending module (512) configured to send the encapsulated version inquiring message to the backup device in the VRRP group.

7. A virtual router redundancy protocol, VRRP, based message communicating system comprising a VRRP group consisting of a master device and at least one backup device, wherein
the master device is configured to send a version inquiring message to the backup device;
the backup device is configured to receive the version inquiring message sent by the master device, carry the inquired VRRP version information of the backup device in a version responding message, and send the version responding message to the master device; and
the master device is further configured to receive the version responding message, acquire the version information of the backup device according to the version responding message, and select one of a VRRP V2 message and a VRRP V3 message according to the version information of the backup device, and send the selected message to the backup device.

8. The system according to claim 7, wherein
when the VRRP group comprises one backup device, master device is specifically configured to select a message having a version which is the same as that of the backup device, and send the selected message to the backup device in the VRRP group;
if the VRRP group comprises multiple backup devices, the master device is specifically configured to send a VRRP V3 message to each one of the backup device in the VRRP group when the versions of the multiple backup devices are all VRRP V3, otherwise send a VRRP V2 message to each one of the backup devices in the VRRP group.

## Patentansprüche

1. Nachrichtensendeverfahren, das auf dem Protokoll für virtuelle Router-Redundanz, VRRP, basiert, das die folgenden Schritte umfasst:
Senden (S11) einer Versionsabfragenachricht zu einer Reservevorrichtung in einer VRRP-Gruppe;
Empfangen (S12) einer durch die Reservevorrichtung gesendeten Versionsantwortnachricht und Erfassen der Versionsinformationen der Reservevorrichtung gemäß der Versionsantwortnachricht; und
Auswählen (S13) einer VRRP V2-Nachricht oder einer VRRP V3-Nachricht gemäß den Versionsinformationen der Reservevorrichtung und Senden der ausgewählten Nachricht zu der Reservevorrichtung in der VRRP-Gruppe.

2. Verfahren nach Anspruch 1, wobei der Schritt des Auswählens einer VRRP V2-Nachricht oder einer VRRP V3-Nachricht gemäß den Versionsinformationen der Reservevorrichtung und Sendens der ausgewählten Nachricht zu der Reservevorrichtung in der VRRP-Gruppe Folgendes umfasst:
falls die VRRP-Gruppe eine Reservevorrichtung umfasst, Auswählen einer Nachricht, die eine Version aufweist, die dieselbe ist wie jene der Reservevorrichtung, und Senden der ausgewählten Nachricht zu der Reservevorrichtung in der VRRP-Gruppe;
falls die VRRP-Gruppe mehrere Reservevorrichtungen umfasst, Senden einer VRRP V3-Nachricht zu jeder der Reservevorrichtungen in der VRRP-Gruppe, wenn die Versionen der mehreren Reservevorrichtungen alle VRRP V3 sind, andernfalls Senden einer VRRP V2-Nachricht zu jeder der Reservevorrichtungen in der VRRP-Gruppe.

3. Verfahren nach Anspruch 1 oder 2, wobei der Schritt des Sendens einer Versionsabfragenachricht zu einer Reservevorrichtung in einer VRRP-Gruppe Folgendes umfasst:
Einkapseln der Versionsabfragenachricht durch Verwenden einer physikalischen MAC einer Schnittstelle und Senden der eingekapselten Versionsabfragenachricht zu der Reservevorrichtung in der VRRP-Gruppe.

4. Nachrichtensendevorrichtung, die auf dem Protokoll für virtuelle Router-Redundanz, VRRP, basiert, die Folgendes umfasst:
eine Abfrageeinheit (51), die konfiguriert ist, eine Versionsabfragenachricht zu einer Reservevorrichtung in einer VRRP-Gruppe zu senden;
eine Erfassungseinheit (52), die konfiguriert ist, eine durch die Reservevorrichtung gesendete Versionsantwortnachricht zu empfangen und die Versionsinformationen der Reservevorrichtung in der VRRP-Gruppe gemäß der Versionsantwortnachricht zu erfassen; und
eine Auswahleinheit (53), die konfiguriert ist, eine VRRP V2-Nachricht oder eine VRRP V3-Nachricht gemäß den Versionsinformationen der Reservevorrichtung auszuwählen und die ausgewählte Nachricht zu der Reservevorrichtung in der VRRP-Gruppe zu senden.

5. Vorrichtung nach Anspruch 4, wobei die Auswahleinheit (53) spezifisch konfiguriert ist:
dann, wenn die Reservevorrichtung in der VRRP-Gruppe eine Reservevorrichtung umfasst, eine Nachricht, die eine Version aufweist, die dieselbe ist wie die der Reservevorrichtung, auszuwählen und die ausgewählte Nachricht zu der Reservevorrichtung in der VRRP-Gruppe zu senden; oder
dann, wenn die Reservevorrichtung in der VRRP-Gruppe mehrere Reservevorrichtungen umfasst, eine VRRP V3-Nachricht zu jeder der Reservevorrichtungen in der VRRP-Gruppe zu senden, wenn die Versionen der mehreren Reservevorrichtungen alle VRRP V3 sind, andernfalls eine VRRP V2-Nachricht zu jeder der Reservevorrichtungen in der VRRP-Gruppe zu senden.

6. Vorrichtung nach Anspruch 4 oder 5, wobei die Abfrageeinheit (51) folgendes umfasst:
ein Einkapselungsmodul (511), das konfiguriert ist, die Versionsabfragenachricht durch Verwenden einer physikalischen MAC einer Schnittstelle einzukapseln; und
ein Sendemodul (512), das konfiguriert ist, die eingekapselte Versionsabfragenachricht zu der Reservevorrichtung in der VRRP-Gruppe zu senden.

7. Nachrichtenkommunikationssystem, das auf dem Protokoll für virtuelle Router-Redundanz, VRRP, basiert, das eine VRRP-Gruppe, die aus einer Master-Vorrichtung und wenigstens einer Reservevorrichtung besteht, umfasst, wobei die Master-Vorrichtung konfiguriert ist, eine Versionsabfragenachricht zu der Reservevorrichtung zu senden;
die Reservevorrichtung konfiguriert ist, die durch die Master-Vorrichtung gesendete Versionsabfragenachricht zu empfangen, die angeforderten VRRP-Versionsinformationen der Reservevorrichtung in einer Versionsantwortnachricht zu führen und die Versionsantwortnachricht zu der Master-Vorrichtung zu senden; und die Master-Vorrichtung ferner konfiguriert ist, die Versionsantwortnachricht zu empfangen, die Versionsinformationen der Reservevorrichtung gemäß der Versionsantwortnachricht zu erfassen und eine VRRP V2-Nachricht oder eine VRRP V3-Nachricht gemäß den Versionsinformationen der Reservevorrichtung auszuwählen und die ausgewählte Nachricht zu der Reservevorrichtung zu senden.

8. System nach Anspruch 7, wobei
wenn die VRRP-Gruppe eine Reservevorrichtung umfasst, die Master-Vorrichtung spezifisch konfiguriert ist, eine Nachricht, die eine Version aufweist, die dieselbe ist wie die der Reservevorrichtung, auszuwählen und die ausgewählte Nachricht zu der Reservevorrichtung in der VRRP-Gruppe zu senden;
falls die VRRP-Gruppe mehrere Reservevorrichtungen umfasst, die Master-Vorrichtung spezifisch konfiguriert ist, eine VRRP V3-Nachricht zu jeder der Reservevorrichtungen in der VRRP-Gruppe zu senden, wenn die Versionen der mehreren Reservevorrichtungen alle VRRP V3 sind, andernfalls eine VRRP V2-Nachricht zu jeder der Reservevorrichtungen in der VRRP-Gruppe zu senden.

## Revendications

1. Procédé d'envoi de messages à base de protocole de redondance de routeur virtuel, VRRP (virtual router redundancy protocol), comprenant les étapes consistant à :
envoyer (S11) un message de demande de version à un dispositif de sauvegarde dans un groupe VRRP ;
recevoir (S 12) un message de réponse de version envoyé par le dispositif de sauvegarde, et acquérir les informations de version du dispositif de sauvegarde conformément au message de réponse de version ; et
sélectionner (S13) l'un d'un message VRRP V2 et d'un message VRRP V3 conformément aux informations de version du dispositif de sauvegarde et envoyer le message sélectionné au dispositif de sauvegarde dans le groupe VRRP.

2. Procédé selon la revendication 1, dans lequel l'étape de sélection de l'un d'un message VRRP V2 et d'un message VRRP V3 conformément aux informations de version du dispositif de sauvegarde et d'envoi du message sélectionné au dispositif de sauvegarde dans le groupe VRRP comprend :
si le groupe VRRP comprend un seul dispositif de sauvegarde, la sélection d'un message ayant une version qui est identique à celle du dispositif de sauvegarde, et l'envoi du message sélectionné au dispositif de sauvegarde dans le groupe VRRP ;
si le groupe VRRP comprend de multiples dispositifs de sauvegarde, l'envoi d'un message VRRP V3 à chacun des dispositifs de sauvegarde dans le groupe VRRP lorsque les versions des multiples dispositifs de sauvegarde sont toutes VRRP V3, et sinon, l'envoi d'un message VRRP V2 à chacun des dispositifs de sauvegarde dans le groupe VRRP.

3. Procédé selon la revendication 1 ou 2, dans lequel l'étape d'envoi d'un message de demande de version à un dispositif de sauvegarde dans un groupe VRRP comprend :
l'encapsulation du message de demande de version en utilisant une adresse MAC physique d'une interface, et l'envoi du message de demande de version encapsulé au dispositif de sauvegarde dans le groupe VRRP.

4. Appareil d'envoi de messages à base de protocole de redondance de routeur virtuel, VRRP, comprenant :
une unité de demande (51) configurée pour envoyer un message de demande de version à un dispositif de sauvegarde dans un groupe VRRP ;
une unité d'acquisition (52) configurée pour recevoir un message de réponse de version envoyé par le dispositif de sauvegarde, et acquérir les informations de version du dispositif de sauvegarde dans ce groupe VRRP conformément au message de réponse de version ; et
une unité de sélection (53) configurée pour sélectionner l'un d'un message VRRP V2 et d'un message VRRP V3 conformément aux informations de version du dispositif de sauvegarde et envoyer le message sélectionné au dispositif de sauvegarde dans le groupe VRRP.

5. L'appareil selon la revendication 4, dans lequel l'unité de sélection (53) est spécifiquement configurée pour :
si le dispositif de sauvegarde dans le groupe VRRP comprend un seul dispositif de sauvegarde, sélectionner un message ayant une version qui est identique à celle du dispositif de sauvegarde, et envoyer le message sélectionné au dispositif de sauvegarde dans le groupe VRRP ; ou
si le dispositif de sauvegarde dans le groupe VRRP comprend de multiples dispositifs de sauvegarde, envoyer un message VRRP V3 à chacun des dispositifs de sauvegarde dans le groupe VRRP lorsque les versions des multiples dispositifs de sauvegarde sont toutes VRRP V3, et sinon, envoyer un message VRRP V2 à chacun des dispositifs de sauvegarde dans le groupe VRRP.

6. L'appareil selon la revendication 4 ou 5, dans lequel l'unité de demande (51) comprend :
un module d'encapsulation (511) configuré pour encapsuler le message de demande de version en utilisant une adresse MAC physique d'une interface ; et
un module d'envoi (512) configuré pour envoyer le message de demande de version encapsulé au dispositif de sauvegarde dans le groupe VRRP.

7. Système de communication de messages à base de protocole de redondance de routeur virtuel, VRRP, comprenant un groupe VRRP consistant en un dispositif maître et au moins un dispositif de sauvegarde, dans lequel
le dispositif maître est configuré pour envoyer un message de demande de version au dispositif de sauvegarde ;
le dispositif de sauvegarde est configuré pour recevoir le message de demande de version envoyé par le dispositif maître, acheminer les informations de version VRRP demandées du dispositif de sauvegarde dans un message de réponse de version, et envoyer le message de réponse de version au dispositif maître ; et
le dispositif maître est en outre configuré pour recevoir le message de réponse de version, acquérir les informations de version du dispositif de sauvegarde conformément au message de réponse de version, et sélectionner l'un d'un message VRRP V2 et d'un message VRRP V3 conformément aux informations de version du dispositif de sauvegarde, et envoyer le message sélectionné au dispositif de sauvegarde.

8. Système selon la revendication 7, dans lequel
lorsque le groupe VRRP comprend un seul dispositif de sauvegarde, le dispositif maître est spécifiquement configuré pour sélectionner un message ayant une version qui est identique à celle du dispositif de sauvegarde, et envoyer le message sélectionné au dispositif de sauvegarde dans le groupe VRRP ;
si le groupe VRRP comprend de multiples dispositifs de sauvegarde, le dispositif maître est spécifiquement configuré pour envoyer un message VRRP V3 à chacun des dispositif de sauvegarde dans le groupe VRRP lorsque les versions des multiples dispositifs de sauvegarde sont toutes VRRP V3, et sinon, envoyer un message VRRP V2 à chacun des dispositifs de sauvegarde dans le groupe VRRP.
